# EUROPÄISCHE PATENTSCHRIFT

(11) **EP 2 687 930 B1**
(45) Veröffentlichungstag und Bekanntmachung des Hinweises auf die Patenterteilung: **03.10.2018**
(21) Anmeldenummer: 12177240.4
(22) Anmeldetag: 20.07.2012
(51) Int. Cl.: G05B 19/05

(54) **Automatisierungseinheit zur Steuerung eines Geräts oder einer Anlage**
Automation unit for controlling a device or a system
Unité d'automatisation destinée à la commande d'un appareil ou d'une installation

(43) Veröffentlichungstag der Anmeldung: 22.01.2014
(73) Patentinhaber: Siemens Aktiengesellschaft, 80333 München (DE)
(72) Erfinder: Leins, Ralf, 75228 Ispringen (DE)

(56) Entgegenhaltungen:
- EP-A1- 1 619 566
- DE-A1- 4 317 729
- DE-A1- 10 163 206

## Beschreibung

Die vorliegende Erfindung betrifft eine Automatisierungseinheit zur Steuerung eines Geräts oder einer Anlage mit
- einem Prozess-Speicherbereich zur Speicherung von Eingangs-Betriebsdaten von einem zu steuernden oder gesteuerten Geräte oder einer zu steuernden oder gesteuerten Anlage und/oder Ausgangssteuerdaten für ein zu steuerndes oder gesteuertes Gerät oder einer zu steuernden oder gesteuerten Anlage, sowie
- eine Steuereinrichtung, welche zum zyklischen Ablauf eines Anwendungsprogramms zur Steuerung des Geräts oder der Anlage ausgebildet und eingerichtet ist.

Derartige Automatisierungseinheiten sind aus dem Stand der Technik bekannt. So sind beispielsweise so genannte "CPU-Module" für Speicherprogrammierbare Steuerungen (SPS) bekannt, welche einen als "Prozessabbild" bezeichneten Speicherbereich aufweisen, in welchem alle für ein verwendetes Anwendungsprogramm notwendigen Eingangswerte und von diesem erzeugten Ausgangswerte vorgehalten werden. Das Anwendungsprogramm läuft im CPU-Modul zyklisch ab, das heißt, nach dem Ende eines Programm-Zyklus beginnt das Applikationsprogramm erneut von vorn. Dabei werden vor jedem Programmablauf die für das Applikationsprogramm notwendigen Eingangsdaten aus dem Prozessabbild eingelesen und die durch das Applikationsprogramm ermittelten Ausgabewerte während beziehungsweise nach dem Ablauf des Applikationsprogramm in das Prozessabbild zurückgeschrieben. Die EP 16 19 566 A1 beschreibt beispielsweise einen vergleichbaren Ablauf und Aufbau.

Weiterhin offenbart die Offenlegungsschrift DE 43 17 729 A1 ein System zur Steuerung einer Maschine, wobei das System zwei im Tandembetrieb arbeitende programmierbare Steuereinheiten aufweist. Dabei arbeitet eine der Steuereinheiten im aktiven Modus und beherrscht den Betrieb der Maschinne, während sich die andere Steuereinheit in einem Bereitschaftsbetrieb befindet. Dabei ist ein Operationsmodus eines Prozessormoduls einer Steuereinheit offenbart, bei welchem das Prozessormodul periodisch Eingangsbildtabellen aus I/O-Modulen in seinen eigenen Speicher kopiert.

Es ist ein Nachteil des genannten Standes der Technik, dass im Rahmen der Projektierung einer solchen Automatisierungseinheit für jede Variable im Prozessabbild genau definiert werden muss, von welchem Eingangsstecker oder Eingangsmodul oder auch Eingangsgerät beispielsweise ein Eingabesignal kommt und auf welchem Weg es zum Prozessabbild im CPU-Modul gelangt. Das Gleiche gilt für die Aktoren, an welchen die berechneten Ausgabewerte im Endeffekt ausgegeben werden müssen. Jede Änderung beispielsweise der Verkabelung oder der Kommunikationsweg in einem Automatisierungssystem hat damit zur Folge, dass durch eine recht aufwändige Umprojektierung die ganzen neuen Kommunikationswege und Kommunikationsverbindungen u.a. bezüglich des Prozessabbilds eingerichtet werden müssen.

Daher ist es eine Aufgabe der vorliegenden Erfindung, ein Automatisierungssystem zur Verfügung zu stellen, welches eine vereinfachte Anpassung an geänderte Kommunikationswege oder Verkabelungen ermöglicht und/oder die bei geänderten Kommunikationswegen erforderliche Umprojektierung vereinfacht.

Die Aufgabe wird gelöst von einer Automatisierungseinheit zur Steuerung eines Geräts oder einer Anlage mit
- einem Prozess-Speicherbereich zur Speicherung von Eingangs-Betriebsdaten von einem zu steuernden oder gesteuerten Gerät oder einer zu steuernden oder gesteuerten Anlage und/oder Ausgangs-Steuerdaten für ein zu steuerndes Gerät oder gesteuertes Gerät oder einer zu steuernden oder gesteuerten Anlage, sowie
- einer Steuereinrichtung, welche zum zyklischen Ablauf eines Anwendungsprogramms zur Steuerung des Geräts oder der Anlage ausgebildet und eingerichtet ist,
- wobei ein Signal-Speicherbereich zur Speicherung von Anwendungs-Eingangsdaten und Anwendungs-Ausgangsdaten vorgesehen ist, und
- wobei die Steuereinrichtung derart ausgebildet und eingerichtet ist, dass vor oder am Beginn eines Ablaufs des Anwendungsprogramms Anwendungs-Eingangsdaten zur Verwendung durch das Anwendungsprogramm aus dem Signalspeicherbereich geladen werden und/oder am oder nach dem Ende des Ablaufs des Anwendungsprogramms vom Anwendungsprogramm ermittelte Anwendungs-Ausgangsdaten im Signalspeicherbereich gespeichert werden,
- wobei weiterhin die Anwendungs-Eingangsdaten im Signal-Speicherbereich jeweils den Eingangs-Betriebsdaten im Prozess-Speicherbereich und/oder die Anwendungs-Ausgangsdaten im Signal-Speicherbereich jeweils den Ausgangs-Steuerdaten im Prozessspeicher direkt zugeordnet oder zuordenbar sind.

Dabei ist weiterhin vorgesehen, dass die Automatisierungseinheit zur Transformation der Eingangs-Betriebsdaten im Prozess-Speicherbereich in Anwendungs-Eingangsdaten im Signal-Speicherbereich und/oder zur Transformation von Anwendungs-Ausgangsdaten im Signal-Speicherbereich in Ausgangs-Steuerdaten im Prozess-Speicherbereich ausgebildet und eingerichtet ist.

Die Funktionalität des vorstehend beispielhaft aufgeführten "Prozessabbilds" oder einer vergleichbaren Speichereinheit, ist quasi auf zwei Speicherbereiche verteilt, den Prozess-Speicherbereich für von einer gesteuerten Anlage kommende beziehungsweise an diese abgehende Mess- und Steuerdaten, und den Signal-Seicherbreich als Speicherbereich für die Ein- und Ausgangswerte eines Steuerprogramms. Dadurch ist es beispielsweise möglich, auf eine Änderung der Verkabelung eines automatisierten Systems beziehungsweise einer Änderung von Kommunikationsverbindungen flexibler zu reagieren, indem das System beispielsweise so ausgelegt wird, dass solche Änderungen sich z.B. vor allem bezüglich einem der Speicherbereiche oder auch vor allem auf eine Verknüpfung dieser Speicherbereiche auswirkt.

Die Transformation von Eingangs-Betriebsdaten in Anwendungs-Eingangsdaten und/oder von Anwendungs-Ausgangsdaten in Ausgangs-Steuerdaten hat beispielsweise den Vorteil, dass zum Beispiel bei der Änderung einer Datenquelle beziehungsweise eines Sensors oder einer ähnlichen Einrichtung des zu steuernden Geräts beziehungsweise der zu steuernden Anlage, sich möglicherweise beispielsweise durch einen anderen Ausgabewert-Bereich auch die entsprechenden Eingangs-Betriebsdaten im Prozess-Speicherbereich ändern. Anstatt daraufhin das komplette Anwendungsprogramm den neuen Sensor-Parametern entsprechend anzupassen, kann beispielsweise durch eine Parameter-Anpassung bei der Transformation der Eingangs-Betriebsdaten in die Anwendungs-Eingangsdaten diese Änderung berücksichtigt werden und daraufhin das Anwendungsprogramm unverändert bleiben.

Eine Automatisierungseinheit kann beispielsweise als eine zentrale Steuereinheit oder so genanntes "CPU-Modul" einer modularen Speicherprogrammierbaren Steuerung (SPS), als komplette SPS, als Computer oder PC oder auch so genannte "Kopfbaugruppe" einer so genannten "dezentralen Peripherie" für eine SPS beziehungsweise eine gesamte solche dezentrale Peripherie ausgebildet und eingerichtet sein. Bevorzugt kann die Automatisierungseinheit als CPU-Modul für eine SPS eine Kompakt-Steuereinrichtung oder auch als PC ausgebildet sein.

Der Prozess-Speicherbereich kann als Schreib-Lese-Speicher (RAM) ausgebildet sein und Teil eines größeren Speichers, beispielsweise eines Arbeitsspeichers der Automatisierungseinheit sein oder auch als gesonderter Speicherbereich ausgebildet sein.

Die Eingangsbetriebsdaten sind von z.B. von Sensoren des zu steuernden Geräts oder der zu steuernden Anlage kommende Daten, die z.B. für die Steuerung des Geräts beziehungsweise der Anlage benützt werden. Solche Eingangs-Betriebsdaten können beispielsweise analoge oder digitale Strom- oder Spannungswerte oder sonstige Daten sein, z.B. die Drehzahl eines Motors, eine Temperatur, eine Schalterstellung, einen Zustand eines Berührungssensors oder auch weitere Anlagen- und Geräte-Eigenschaften oder Identifikationsdaten sein.

Das zu steuernde oder gesteuerte Gerät beziehungsweise die zu steuernde oder gesteuerte Anlage kann beispielsweise insgesamt oder teilweise unmittelbar mit der Automatisierungseinheit verbunden sein oder auch über ein oder mehrere Anschlussmodule mit der Automatisierungseinheit verbunden sein. Ein solches Anschlussmodul kann beispielsweise als I/O-Baugruppe für eine SPS ausgebildet sein und z.B. über einen so genannten Rückwandbus mit einer als CPU-Modul für die SPS ausgebildeten Automatisierungseinheit verbunden sein. Ein solches Anschlussmodul kann zum Beispiel zur unmittelbaren Verbindung mit Sensoren und Aktoren des gesteuerten Geräts oder der gesteuerten Anlage dienen.

Ausgangs-Steuerdaten können beispielsweise Daten zur Ansteuerung eines Aktors des Geräts oder der Anlage, wie beispielsweise eines Motors, eines Antriebs, eines Umschalters, eines Relais oder einer Steuer- oder Leistungselektronik der Anlage oder des Geräts sein. Auch die Aktoren können beispielsweise unmittelbar mit der Automatisierungseinheit verbunden sein oder beispielsweise auch über ein Anschlussmodul mit der Automatisierungseinheit verbunden sein.

Unter einem Anwendungsprogramm wird ein beispielsweise in einem Anwendungsspeicher der Automatisierungseinheit gespeichertes Steuerprogramm für das Gerät oder die Anlage verstanden.

Unter einem Zyklus des Programmablaufs wird ein Durchlauf des Anwendungsprogramm verstanden. Unter dem zyklischen Ablauf werden mindestens zwei aufeinander folgende Abläufe, in der Regel mehr als zwei Durchläufe des Anwendungsprogramms verstanden, wobei zwischen den einzelnen Abläufen auch Pausen bestehen können. Die Zahl der Durchläufe des Anwendungsprogramms, das heißt, die Zahl der Programmzyklen, kann beispielsweise eine vorbestimmte Anzahl von Zyklen sein oder auch an vorgebbare oder vorgegebene Abbruchbedingungen geknüpft. Der zyklische Ablauf des Anwendungsprogramms kann beispielsweise auch durch einen manuellen Stopp beendete werden.

Der Signal-Speicherbereich kann ebenfalls als Schreibe-Lese-Speicher (RAM) ausgebildet und eingerichtet sein und beispielsweise Teil eines größeren Speicherbereichs der Automatisierungseinheit, wie beispielsweise ein darin vorgesehener Arbeitsspeicher sein. Der Signal-Speicherbereich kann aber auch als gesonderter Schreib-Lesespeicher ausgebildet und eingerichtet sein.

Anwendungs-Eingangsdaten können derartige Daten sein, welche das Anwendungsprogramm zum ordnungsgemäßen Ablauf benötigt bzw. deren Verwendung beim Ablauf des Anwendungsprogramms vorgesehen ist, z.B. um das Gerät beziehungsweise die Anlage oder auch Teile davon zu steuern.

Anwendungs-Ausgangsdaten sind beispielsweise solche Daten, die beim Durchlauf des Anwendungsprogramms, das heißt z.B. während eines Zyklus, z.B. zur die Steuerung der Anlage beziehungsweise des Geräts oder auch Teilen davon, erzeugt werden.

Dabei kann vorgesehen sein, dass vor oder am Beginn eines Ablaufs des Anwendungsprogramms, insbesondere vor Beginn mehrerer aufeinander folgender Abläufe oder auch jedes Ablaufs des Anwendungsprogramms, die Anwendungs-Eingangsdaten durch die Steuereinrichtung eingelesen werden, um dann vom Anwendungsprogramm verwendet zu werden. Weiterhin kann das Anwendungsprogramm die Anwendungs-Eingangsdaten auch während des Auflaufs unmittelbar aus dem Signal-Speicherbereich einlesen. Das Einlesen der Anwendungs-Eingangsdaten kann beispielsweise in einen vom Anwendungsprogramm verwendeten Arbeitsspeicherbereich der Automatisierungseinheit erfolgen.

Beim oder nach dem Ende des Ablaufs des Anwendungsprogramms, insbesondere nach jedem Ablauf des Anwendungsprogramms, können die Anwendungs-Ausgangsdaten von der Steuereinrichtung in den Signal-Speicherbereich geschrieben werden.

Weiterhin ist die Automatisierungseinheit derart ausgebildet und eingerichtet, dass die Anwendungs-Eingangsdaten im Signal-Speicherbereich jeweils Eingangs-Betriebsdaten im Prozess-Speicherbereich zuordenbar sind. Dabei kann beispielsweise jeweils ein Eingangs-Betriebsdatum im Prozess-Speicherbereich einem Anwendungs-Eingangsdatum im Signal-Speicherbereich zugeordnet sein. Entsprechend kann z.B. auch ein Speicherplatz für ein Eingangs-Betriebsdatum einem Speicherplatz für ein Anwendungs-Eingangsdatum zugeordnet sein.

Auf diese Weise können beispielsweise von an der Automatisierungseinheit oder einem Anschlussmodul der Automatisierungseinheit angeschlossenen Sensoren kommenden Eingangssignale, über den Prozess-Speicherbereich in den Signal-Speicherbereich und darüber zum Anwendungsprogramm weiter vermittelt werden.

Weiterhin kann aber auch vorgesehen sein, dass bei einzelnen oder auch allen Anwendungs-Eingangsdaten im Signal-Speicherbereich keine Zuordnung zu Eingangs-Betriebsdaten im Prozess-Speicherbereich erfolgt und die Anwendungs-Eingangsdaten aus anderen Quellen der Automatisierungseinheit zugeführt werden. Die Automatisierungseinheit ist aber derart ausgebildet und ausgestaltet, dass eine derartige Zuordnung zwischen Signal- und Prozess-Speicherbereich zumindest möglich und/oder einrichtbar ist.

Bei der Zuordnung kann beispielsweise vorgesehen sein, dass jedem Anwendungs-Eingangsdatum im Signal-Speicherbereich ein, insbesondere genau ein, Eingangs-Betriebsdatum im Prozess-Speicherbereich zugeordnet ist.

Weiterhin ist die Automatisierungseinheit derart ausgebildet, dass den Anwendungs-Ausgangsdaten im Signal-Speicherbereich jeweils Ausgangs-Steuerdaten im Prozess-Speicherbereich zugeordnet sind oder zuordenbar sind. Entsprechend kann z.B. auch ein oder mehreren Speicherplätzen für Anwendungs-Ausgangsdaten ein oder mehrere Speicherplätze für Ausgangs-Steuerdaten zugeordnet sein.

Auf diese Weise können die vom Anwendungsprogramm erzeugten Ausgangsdaten durch Weitervermittlung in den Prozess-Speicherbereich an an der Automaisierungseinheit oder damit verbundenen Ein-/Ausgabe-Modulen angeschlossenen Aktoren, Geräten oder Anlagen, ausgegeben werden.

Auch hier kann weiterhin vorgesehen sein, dass nicht allen, oder auch keinen, der Anwendungs-Ausgangsdaten, AusgangsSteuerdaten im Prozess-Speicherbereich zugeordnet sind, sondern diese Daten auf anderem Weg der zu steuernden Anlage beziehungsweise dem zu steuernden Gerät oder auch Teilen davon zugeführt werden. Jedenfalls ist die Automatisierungseinheit derart ausgestaltet und ausgebildet, dass eine derartige Zuordnung zumindest möglich und beispielsweise von einem Benutzer im Bedarfsfall einrichtbar ist.

Bei der Zuordnung kann beispielsweise vorgesehen sein, dass jedem Anwendungs-Ausgangsdatum im Signal-Speicherbereich ein, insbesondere genau ein, Ausgangs-Steuerdatum im Prozess-Speicherbereich zugeordnet ist.

Wie vorstehend bereits beschrieben, ist vorgesehen, dass die Automatisierungseinheit zur Transformation der Eingangs-Betriebsdaten im Prozess-Speicherbereich in Anwendungs-Eingangsdaten im Signal-Speicherbereich und/oder zur Transformation von Anwendungs-Ausgangsdaten im Signal-Speicherbereich in Ausgangs-Steuerdaten im Prozess-Speicherbereich ausgebildet und eingerichtet ist.

Eine solche Transformation kann im einfachsten Fall aus einer Übertragung der Daten zwischen den genannten Speicherbereichen bestehen. Weiterhin kann die Transformation eine derartige Übertragung umfassen.

Insbesondere kann die Transformation aus einer Übertragung und Umwandlung der Daten bestehen. So können beispielsweise die Eingangs-Betriebsdaten im Prozess-Speicherbereich in jeweils zugeordneten Datenquellen typischen Formaten vorliegen und diese dann bei der Transformation in ein Datenformat zur Speicherung im Signal-Speicherbereich umgewandelt werden, welche zur Verwendung durch das Anwendungsprogramm geeignet beziehungsweise eingerichtet ist. Dabei kann die Umwandlung für verschiedene Eingangs-Betriebsdaten verschieden sein oder auch einheitlich für verschiedene Eingangs-Betriebsdaten. Eine solche Umwandlung kann beispielsweise eine Formatänderung, eine Normierung, eine Zahlenwert-Umwandlung, Einheitenänderungen oder vergleichbare Umwandlungen umfassen.

Die Transformation von Anwendungs-Ausgangsdaten im Signal-Speicherbereich in Ausgangs-Steuerdaten im Prozess-Speicherbereich kann beispielsweise die entsprechend umgekehrten Umwandlungen umfassen.

Diese Ausgestaltung hat beispielsweise den Vorteil, dass zum Beispiel bei der Änderung einer Datenquelle beziehungsweise eines Sensors oder einer ähnlichen Einrichtung des zu steuernden Geräts beziehungsweise der zu steuernden Anlage, sich möglicherweise beispielsweise durch einen anderen Ausgabewert-Bereich auch die entsprechenden Eingangs-Betriebsdaten im Prozess-Speicherbereich ändern. Anstatt daraufhin das komplette Anwendungsprogramm den neuen Sensor-Parametern entsprechend anzupassen, kann beispielsweise durch eine Parameter-Anpassung bei der Transformation der Eingangs-Betriebsdaten in die Anwendungs-Eingangsdaten diese Änderung berücksichtigt werden und daraufhin das Anwendungsprogramm unverändert bleiben.

Dasselbe gilt entsprechend, wenn sich beispielsweise ein Aktor oder Antrieb, welcher durch die Automatisierungseinheit gesteuert wird, in seinen Eigenschaften ändert beziehungsweise durch einen anderen ersetzt wird. Auch hier kann dann beispielsweise durch eine Parameteränderung bei der Transformation der Anwendungs-Ausgangsdaten in die Ausgangs-Steuerdaten diese Änderung berücksichtigt werden, ohne gleich das gesamte Anwendungsprogramm ändern zu müssen.

Weiterhin kann vorgesehen sein, dass der Signal-Speicherbereich lokale Anwendungs-Eingangsdaten und /oder lokalen Anwendungsdaten-Ausgangsdaten umfasst, welche einem unmittelbar von der Automatisierungseinheit gesteuerten Gerät oder Geräteteil oder einer unmittelbar von der Automatisierungseinheit gesteuerten Anlage oder Anlagenteil zugeordnet sind.

Dabei sind bei einem Gerät oder Geräteteil beziehungsweise Anlagen oder Anlagenteil jeweils die Menge der Sensoren und Aktoren des Geräts beziehungsweise Geräteteils oder der Anlage beziehungsweise des Anlagenteils umfasst, die unmittelbar mit der Automatisierungseinheit verbunden sind. Dabei wird unter der unmittelbaren Verbindung mit der Automatisierungseinheit verstanden, dass die jeweiligen Sensoren beziehungsweise Aktoren direkt mit der Automatisierungseinheit verbunden sind oder mit einem Anschlussmodul der Automatisierungseinheit verbunden sind. Bei einer Ausgestaltung der Automatisierungseinheit als CPU-Modul für eine SPS kann dies beispielsweise bedeuten, dass die jeweiligen Sensoren beziehungsweise Aktoren unmittelbar mit dem CPU-Modul oder mit einer oder mehreren Anschluss-Baugruppen (z.B. einer so genannten I/O-Baugruppe(n)) verbunden sind, wobei das bzw. die Anschlussmodule dann mit dem CPU-Modul beispielsweise über einen so genannten Rückwandbus verbunden sind.

Insbesondere kann vorgesehen sein, dass der Signal-Speicherbereich ausschließlich lokale Anwendungs-Eingangsdaten und/oder lokalen Anwendungs-Ausgangsdaten umfasst.

Dabei kann jedem lokalen Anwendungs-Datum im Signal-Speicherbereich ein Eingangs-Betriebsdatum im Prozess-Speicherbereich zugeordnet sein. Weiterhin kann jedem lokalen Anwendungs-Ausgangsdatum im Signal-Speicherbereich ein Ausgangs-Steuerdatum im Prozess-Speicherbereich zugeordnet sein.

In diesem Fall werden dann die im Prozess-Speicherbereich von Sensoren des gesteuerten Systems zugehenden Signale als Eingangs-Betriebsdaten gespeichert und in Anwendungs-Eingangsdaten im Signal-Speicherbereich transformiert. Die vom Anwendungsprogramm erzeugten und im Signal-Speicherbereich abgelegten lokalen Anwendungs-Ausgangsdaten werden in dem Fall dann in Ausgangs-Steuerdaten im Prozess-Speicherbereich transformiert und von dort an Aktoren und weitere Teile des gesteuerten Geräts beziehungsweise der gesteuerten Anlage ausgegeben.

Weiterhin kann die Automatisierungseinheit den gespeicherten lokalen Anwendungs-Eingangsdaten und/oder den lokalen Anwendungs-Ausgangsdaten zugeordnete lokale Zusatzinformationen umfassen. Dabei kann eine bestimme Zusatzinformation beispielsweise einem einzelnen lokalen Anwendungs-Eingangsdatum beziehungsweise lokalen Anwendungs-Ausgangsdatum zugeordnet sein oder auch mehreren dieser Daten oder auch allen Eingangs- bzw. Ausgangs-Daten.

Die lokalen Zusatzinformationen können beispielsweise Informationen umfassen, die bei der Transformation von Eingangs-Betriebsdaten in lokale Anwendungs-Eingangsdaten und/oder lokalen Anwendungs-Ausgangsdaten in Ausgangs-Steuerdaten verwendet werden und/oder dabei notwendig sind. Insbesondere können die Zusatzinformationen beispielsweise eine Maßeinheit, einen Messbereich, eine Messart, Ersatzwerte oder weitere Größen- beziehungsweise Informationen bezüglich der Anwendungs-Eingangsdaten oder Anwendungs-Ausgangsdaten umfassen. Insbesondere kann vorgesehen sein, dass allen lokalen Anwendungs-Eingangsdaten lokale Zusatzinformationen zugeordnet sind. Dieser Fall kann beispielsweise vorliegen, wenn alle für das Anwendungsprogramm notwendigen Informationen von Sensoren kommen beziehungsweise für Aktoren bestimmt sind, welche unmittelbar mit der Automatisierungseinheit, entweder direkt oder über ein Anschlussmodul, verbunden sind.

Weiterhin kann der Signal-Speicherbereich dezentrale Anwendungs-Eingangsdaten und/oder dezentrale Anwendungs-Ausgangsdaten umfassen, die von einem von einer weiteren automatisierungseinheit gesteuerten weiteren Gerät oder einem weiteren Geräteteil oder einer von der weiteren Automatisierungseinheit gesteuerten weiteren Anlage oder einem weiteren Anlagenteil zugeordnet sind. Dabei kann die weitere Automatisierungseinheit wiederum anlog der Automatisierungseinheit ausgebildet und eingerichtet sein. Bevorzugt kann die weitere Automatisierungseinheit beispielsweise als ein Steuerungs- oder CPU-Modul für eine SPS, als Kompakt-Steuerung, als Computer oder PC oder auch als Kopf- oder Steuerbaugruppe für eine dezentrale Peripherie-Gruppe für eine SPS ausgebildet und eingerichtet sein.

Die Anwendungs-Eingangsdaten können dann beispielsweise entsprechenden Quelldaten innerhalb der weiteren Automatisierungseinheit zugeordnet sein, die dann beispielsweise über eine Kommunikationsverbindung zwischen der Automatisierungseinheit und der weiteren Automatisierungseinheit von der weiteren Automatisierungseinheit in den Signal-Speicherbereich der Automatisierungseinheit übertragen werden können.

Entsprechend können beispielsweise dezentrale Anwendungs-Ausgangsdaten im Signal-Speicherbereich der Automatisierungseinheit entsprechenden Zieldaten in der weiteren Automatisierungseinheit zugeordnet sein und ebenfalls über eine Kommunikationsverbindung in die weitere Automatisierungseinheit übertragen werden.

Diese Ausgestaltung hat den Vorteil, dass es auf diese Weise relativ einfach möglich ist, innerhalb eines Anwendungsprogramms sowohl mit Sensoren und Aktoren zu arbeiten, welche unmittelbar mit der Automatisierungseinheit verbunden sind, als auch mit solchen Sensoren und/oder Aktoren, welche unmittelbar mit einer anderen Automatisierunseinheit, beispielsweise der hier genannten weiteren Automatisierungseinheit, verbunden sind. Dabei greift das Anwendungsprogramm immer auf den gleichen Variablen-Satz im Signal-Speicherbereich zu und über beispielsweise eine einstellbare Verknüpfung dieser Variablen z.B. mit entsprechenden Variablen im Prozess-Speicherbereich oder in weiteren Automatisierungseinheiten kann beispielsweise bei Änderungen der Beschaltung dies relativ schnell in der Automatisierungseinheit geändert beziehungsweise umparametriert werden, ohne dass beispielsweise Änderungen im Anwendungsprogramm erforderlich sind.

Die Automatisierungseinheit kann weiterhin den gespeicherten dezentralen Anwendungs-Eingangsdaten und/oder den dezentralen Anwendungs-Ausgangsdaten zugeordnete dezentrale Zusatzinformationen umfassen. Dabei können den Anwendungs-Eingangsdaten zugeordnete dezentrale Zusatzinformationen beispielsweise eine oder mehrere Adressinformationen über diesen zugeordnete Quelldaten in der weiteren Automatisierungseinheit umfassen oder aus dieser Adressinformation bestehen. Dabei kann beispielsweise jeweils einem Anwendungs-Eingangsdatum eine dezentrale Zusatzinformation mit einer oder mehreren Adressinformationen zugeordnet sein.

Weiterhin können dezentralen Anwendungs-Ausgangsdaten zugeordnete dezentrale Zusatzinformationen Adressinformationen über diesen zugeordnete Zieldaten in der weiteren Automatisierungseinheit umfassen oder aus solchen Adressdaten bestehen. Dabei kann wiederum beispielsweise jedem dezentralen Anwendungs-Ausgangsdatum eine dezentrale Zusatzinformation zugeordnet sein, welche eine oder mehrere Adressinformationen bezüglich diesen Ausgangsdaten zugeordneten Zieldaten in der weiteren Automatisierungseinheit umfasst oder aus diesen besteht.

Allgemein kann die Automatisierungseinheit derart ausgestaltet sein, dass den Anwendungs-Eingangsdaten und/oder Anwendungs-Ausgangsdaten im Signal-Speicherbereich Zusatzinformationen zugeordnet sind, insbesondere jedem dieser Eingangsdaten und jedem dieser Ausgangsdaten eine Zusatzinformation zugeordnet ist. Insbesondere kann diese Zusatzinformation Informationen über die Weiterleitung der Eingangs- beziehungsweise Ausgangsdaten umfassen. Dieses können beispielsweise die vorstehend genannten Maß- beziehungsweise Umrechnungsinformationen und/oder auch die genannten Adressinformationen sein.

Bei einer Änderung beispielsweise einer Verkabelung des Automatisierungssystems oder auch einer Änderung von Kommunikationsverbindungen kann auf diese Weise beispielsweise einfach durch Veränderung der entsprechenden Zusatzinformation zu entsprechend zugeordneten Eingangs- beziehungsweise Ausgangsdaten im Signal-Speicherbereich eine Anpassung an diese Änderung vorgenommen werden. Auf diese Weise kann die entsprechende Anpassung durch z.B. durch eine ausschließliche Änderungen dieser Zusatzinformationen zumindest erheblich vereinfacht werden.

Die in der vorliegenden Beschreibung verwendete Nomenklatur von lokalen und dezentralen Ein- und Ausgangsdaten bzw. lokalen und dezentralen Zusatzinformationen können z.B. als rein logische oder inhaltliche Charakterisierung von Daten, Speicherplätzen und/oder Informationen eingerichtet sein. So kann z.B. bei einer Änderung eines lokalen Anwendungs-Datums (z.B. eines lokalen Anwendungs-Eingangsdatums) im Signal-Speicherbereich in ein entsprechendes dezentrales Datum (oder umgekehrt) vorgesehen sein, dass die Adresse des Datums und/oder die Adresse einer gegebenenfalls vorgesehenen Zusatzinformation unverändert bleibt. Dabei kann unter der genannten Adresse z.B. eine physikalische Adresse im Speicher und/oder auch eine Zugriffsadresse oder ein Variablen-Namen verstanden werden. So kann eine Änderung von einem lokalen in ein dezentrales Anwendungsdatum (oder umgekehrt) beispielsweise alleine durch Änderung der zugehörigen Zusatzinformation gemäß der vorliegenden Beschreibung erfolgen.

Alternativ kann auch vorgesehen sein, dass bei einer Änderung von einem lokalen in ein dezentrales Anwendungsdatum (oder umgekehrt) im Signal-Speicherbereich zusätzlich auch Daten, Speicherplätze und/oder Informationen im Speicher verschoben werden, z.B. indem sie mit einer andere Adresse (z.B. eine physikalische Adresse im Speicher und/oder auch eine Zugriffsadresse oder ein Variablen-Namen) versehen werden.

Die weitere Automatisierungseinheit kann beispielsweise auch als Automatisierungseinheit gemäß der vorliegenden Beschreibung ausgestaltet und eingerichtet sein.

Dabei kann insbesondere vorgesehen sein, dass den dezentralen Anwendungs-Eingangsdaten in der Automatisierungseinheit als Quelldaten lokale Anwendungs-Eingangsdaten in der weiteren Automatisierungseinheit zugeordnet sind. Dabei sind diese lokalen Anwendungs-Eingangsdaten in der weiteren Automatisierungseinheit dann entsprechenden lokalen Eingangs-Betriebsdaten in der weiteren Automatisierungseinheit zugeordnet. Diesen lokalen Eingangs-Betriebsdaten können dann wiederum Daten von unmittelbar an der weiteren Automatisierungseinheit angeschlossenen Sensoren und Datenquellen der zu steuernden Anlage beziehungsweise des zu steuernden Geräts zugeordnet sein.

Weiterhin können dezentralen Anwendungs-Ausgangsdaten in der Automatisierungseinheit lokale Anwendungs-Ausgangsdaten in der weiteren Automatisierungseinheit zugeordnet sein, welchen wiederum Ausgangs-Steuerdaten in einem Prozess-Speicherbereich der weiteren Automatisierungseinheit zugeordnet sind. Diesen Ausgangs-Steuerdaten sind dann z.B. zum Ansteuern von Aktoren oder weiteren Steuereinheiten im zu steuernden Gerät beziehungsweise de gesteuerten Anlage vorgesehen.

In der vorliegenden Beschreibung werden insbesondere die Begriffe "Daten" und "Informationen" regelmäßig im Plural gebraucht. Dies geschieht insbesondere aus Gründen der sprachlichen Klarheit und Verständlichkeit und auch, da in vielen Anwendungsfällen mehrere dieser Daten beziehungsweise Informationen vorliegen. Trotzdem wird in der vorliegenden Beschreibung und den Ansprüchen unter "Daten" auch ein einzelnes Datum und unter "Informationen" auch eine einzelne Information verstanden

Die vorsehend genannte Aufgabe wird auch gelöst von einem Automatisierungssystem, umfassend eine Automatisierungseinheit gemäß der vorliegenden Beschreibung sowie eine weitere Automatisierungseinheit gemäß der vorliegenden Beschreibung, wobei die Automatisierungseinheit und die weitere Automatisierungseinheit über eine Kommunikationsverbindung zur Übertragung von Daten verbunden sind.

Eine solche Kommunikationsverbindung kann beispielsweise als Ethernet-, als Profinet-, als Profibus-, als WLAN-, als Mobilfunk-Verbindung oder eine vergleichbare Kommunikationsverbindung beziehungsweise eine Kommunikationsverbindung über ein vergleichbares Kommunikationsnetz ausgebildet und eingerichtet sein bzw. eine derartige Kommunikationsverbindung umfassen. Insbesondere kann die Kommunikationsverbindung zur Übertragung von Anwendungs-Ausgangsdaten und/oder Anwendungs-Eingangsdaten zwischen den beiden Automatisierungseinheiten ausgebildet und eingerichtet sein.

Die vorstehend genannte Aufgabe wird auch gelöst durch ein erstes Verfahren zum Betrieb einer Automatisierungseinheit gemäß der vorliegenden Beschreibung, umfassend die Schritte:
a) Erfassen eines Messwerts von einer zu steuernden Anlage oder einem zu steuernden Gerät;
b) Speichern des Messwerts als Eingangs-Messwert im Prozess-Speicherbereich der Automatisierungseinheit;
c) Transformieren des Eingangs-Messwerts in einen im Signal-Speicherbereich gespeicherten Anwendungs-Startwert, insbesondere unter Verwendung von in der Automatisierungseinheit gespeicherten Zusatzinformationen zum Anwendungs-Startwert;
d) Einlesen des Anwendungs-Startwerts durch die Steuereinrichtung und Ablauf eines Zyklus des Anwendungsprogramms, wobei ein Anwendungs-Ausgabewert im Signal-Speicherbereich gespeichert wird, insbesondere nach dem Ablauf des Anwendungsprogramms;
e) Transformieren des Anwendungs-Ausgabewerts in einen im Prozess-Speicherbereich gespeicherten Ausgangs-Steuerwert, insbesondere unter Verwendung einer dem Anwendungs-Ausgabewert zugeordneten Zusatzinformation;
f) Ausgabe des Ausgangs-Steuerwerts an die zu steuernde Anlage oder das zu steuernde Gerät.

Weiterhin wird die vorstehend genannte Aufgabe auch gelöst durch ein zweites Verfahren zum Betrieb eines Automatisierungssystems gemäß der vorliegenden Beschreibung, umfassend die Schritte:
a) Erfassen eines Messwerts von einer zu steuernden Anlage oder einem zu steuernden Gerät;
b) Speichern des Messwerts als Eingangs-Messwert im Prozess-Speicherbereich der weiteren Automatisierungseinheit;
c) Übertragen des Eingangs-Messwerts oder eines daraus abgeleiteten transformierten Messwerts an die Automatisierungseinheit und Abspeichern dieses Wertes als im Signal-Speicherbereich der Automatisierungseinheit gespeicherten Anwendungs-Startwert;
d) Einlesen des Anwendungs-Startwerts durch die Steuereinrichtung der Automatisierungseinheit und Ablauf eines Zyklus des Anwendungsprogramms in der Automatisierungseinheit, wobei ein Anwendungs-Ausgabewert im Signal-Speicherbereich der Automatisierungseinheit gespeichert wird, insbesondere nach Ablauf des Anwendungsprogramms gespeichert wird;
e) Übertragen des Anwendungs-Ausgabewerts zur weiteren Automatisierungseinheit und Speicherung dieses Anwendungs-Ausgabewerts als Ausgangs-Steuerwert oder Transformation des Anwendungs-Steuerwerts in der weiteren Automatisierungseinheit in einen dann dort gespeicherten Ausgangs-Steuerwert;
f) Ausgabe des Ausgangs-Steuerwerts an die zu steuernde Anlage oder das zu steuernde Gerät.

Während das erste Verfahren insbesondere für die Steuerung von an die Automatisierungseinheit angeschlossenen Anlagen oder Anlagenteile beziehungsweise Geräte oder Geräteteile ausgebildet bzw. geeignet ist, ist der Anwendungsbereich des zweiten Verfahrens insbesondere in dem Fall, in welchem die zu steuernden Anlagen und Anlagenteile an der weiteren Automatisierungseinheit angeschlossen sind, wobei das Anwendungsprogramm selbst aber in der Automatisierungseinheit abläuft.

Weiterhin löst auch eine Kombination des ersten und zweiten Verfahrens die vorstehend genannte Aufgabe. Dabei werden dann Teile der im Signal-Speicherbereich abgespeicherten Anwendungs-Startwerte beziehungsweise Anwendungs-Ausgabewerte im Prozess-Speicherbereich gespeicherten Werten der Automatisierungseinheit zugeordnet, während andere der Anwendungs-Werte im Signal-Speicherbereich der Automatisierungseinheit der weiteren Automatisierungseinheit zugeordnet sind.

Eine derartige Ausgestaltung könnte z.B. bei einer größeren Anlage beziehungsweise einem größerem Gerät vorgesehen sein, wobei dann Teile der Anlage oder des Geräts unmittelbar mit der Automatisierungseinheit verbunden sind und andere Teile der Anlage beziehungsweise des Geräts mit der weiteren Automatisierungseinheit verbunden sind, und wobei weiterhin das Steuerungsprogramm für die gesamte Anlage beziehungsweise das gesamte Gerät in der Automatisierungseinheit abläuft.

Auch hier können die Automatisierungseinheit sowie die weitere Automatisierungseinheit gemäß der vorliegenden Beschreibung ausgestaltet sein, wobei insbesondere auch die Datenverschiebung zwischen beiden Automatisierungseinheit gemäß der vorliegenden Beschreibung ausgestaltet und ausgebildet sein kann.

Weitere vorteilhafte Ausgestaltungen ergeben sich aus den Unteransprüchen.

Im Folgenden wird die Erfindung beispielhaft mit Bezug auf die beiliegenden Figuren näher erläutert.

Es zeigen:
Fig. 1 ein Beispiel für eine mögliche Ausgestaltung einer CPU-Steuerungsbaugruppe für eine SPS;
Fig. 2 eine Ausgestaltung zweier CPU-Module für eine SPS zur Steuerung einer Anlage.

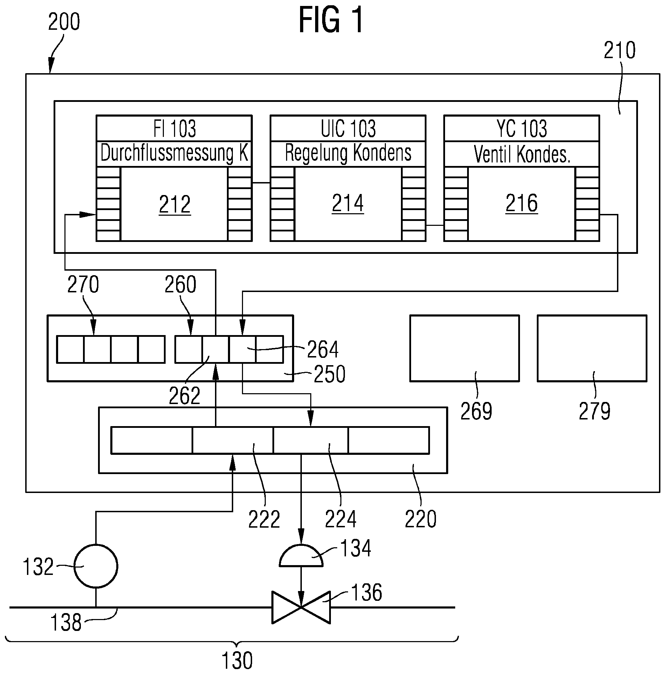

Fig. 1 zeigt eine CPU-Baugruppe 200 für eine Speicherprogrammierbare Steuerung (SPS), die in Fig. 1 nicht vollständig dargestellt ist. Die CPU-Baugruppe 200 ist zur Steuerung eines Anlagenteils 130 ausgebildet, welche einen Durchflussmesser 132 für eine Rohrleitung 138 sowie ein Ventil 136 mit einem zugehörigen Stellungsregler 134 umfasst. Ein Messwert des Durchflussmessers 132 wird über eine nicht in Fig. 1 dargestellt I/O-Baugruppe der SPS und einen ebenfalls nicht in Fig. 1 dargestellten Rückwandbus der SPS einer Eingangsspeicherzelle 222 eines physikalischen Prozessabbilds 220 im CPU-Modul 200 zugeführt. Dabei ist das physikalische Prozessabbild 220 ein Beispiel für einen Prozess-Speicherbereich gemäß der vorliegenden Beschreibung.

Weiterhin ist in Fig. 1 ein, als "technologisches Signalabbild" 250 bezeichneter, weiterer Speicherbereich dargestellt, welcher ein Beispiel für einen Signal-Speicherbereich gemäß der vorliegenden Beschreibung ist. Im technologischen Signalabbild 250 ist ein Block Speicherbereichen für lokalen Signale 260 sowie ein Block von Speicherbereichen für dezentralen Signale 270 dargestellt.

Weiterhin umfasst das CPU-Modul, welches ein Beispiel für eine Automatisierungseinheit gemäß der vorliegenden Erfindung ist, einen Speicherbereich 269 mit lokalen Beschreibungsinformationen zu den im lokalen Signalspeicherblock 260 gespeicherten Daten. Dazuhin umfasst die CPU 200 einen Speicherbereich 279 mit weiteren dezentralen Beschreibungsinformationen zu den im dezentralen Speicherblock 270 gespeicherten Daten.

Die vier Speicherzellen im physikalischen Prozessabbild 220 sind dabei den vier Speicherzellen mit den lokalen Signalen 260 im technologischen Signalabbild 250 zugeordnet. Dabei sind im physikalischen Prozessabbild jeweils die Werte so gespeichert, wie sie von den Sensoren, beispielsweise dem Durchflusssensor 132 kommen, oder wie sie an entsprechende Aktoren, wie beispielsweise den Stellungsregler 134 herausgehen.
Im technologischen Signalabbild 250 sind die Werte dagegen jeweils als Absolutwerte mit entsprechend vorgegebenen Einheiten gespeichert. Die Umrechnung der Daten aus dem physikalischen Prozessabbild 220 in solche im technologischen Signalabbild 250 erfolgt mit Hilfe der Beschreibungsinformation 269 für die lokalen Signaldaten 260. Diese Beschreibungsinformation 269 für die lokalen Signale sind Beispiele für lokale Zusatzinformationen gemäß der vorliegenden Erfindung. Beispielsweise wird der vom Stellungsregler 132 kommende Eingangsmesswert 222 im physikalischen Prozessabbild 220 mit Hilfe eines der lokalen Signalbeschreibung 269 entnommenen Umrechnungsfaktors in einen in einer Speicherzelle 262 des lokalen Signalabbilds gespeicherten technologischen Durchflusswert umgerechnet.

Das CPU-Modul 200 umfasst weiterhin eine Steuereinrichtung 210 mit einem Anwendungsprogramm 212, 214, 216, welches in Fig. 1 symbolisch als drei Anwendungs-Programmblocks 212, 214, 216, dargestellt ist. Dabei wird im Programmblock 212 das Ergebnis der Durchflussmessung analysiert, mit dem Anwendungsprogramm-Baustein 214 ein Regelungsalgorithmus berechnet und daraus im letzten Programmsegment 216 die Einstellung des Ventils 136 und der entsprechende Wert des Stellungsreglers 134 ermittelt. Dieses Anwendungsprogramm 212, 214, 216 läuft zyklisch ab. Nach Beendigung des letzten Applikationsblocks 216 eines Programm-Zykluses werden die Ergebnisse der Berechnungen in den entsprechenden Speicherblock 264 des technologischen Signalabbilds 250 geschrieben. Im in Fig. 1 dargestellten Beispiel wird dabei der Regelungswert für den Stellungsregler 134 als technologischer Wert in einer Speicherzelle 264 des lokalen Signalabbilds 260 gespeichert. Danach werden vor dem erneuten Ablauf des Applikationsprogramms 212, 214, 216, die neuen Startwerte für das Applikationsprogramm 212, 214, 216, eingelesen, was im vorliegenden Fall der technologische Durchflusswert im Speicherbereich 262 des technologischen Signalabbilds 250 ist. Danach läuft das Programm 212, 214, 216 erneut ab. Diese zyklische Ablauf läuft so lange ab, bis er beispielsweise manuell von einem Bediener unterbrochen wird, eine entsprechende Abbruch-Bedingung eingetreten ist oder eine vorgegebenen Zeit abgelaufen bzw. erreicht ist.

Der im Ausgangspeichersegment 264 des technologischen Signalabbilds 250 gespeicherte technologische Regelungswert für den Stellungsregler 134 wird mit Hilfe von der Speicherzelle 264 zugeordneten Beschreibungsinformationen aus den Beschreibungsdaten für die lokalen Signale 269 ein physikalischer Stellungswert berechnet und in einer Ausgangsspeicherzelle 224 des physikalischen Prozessabbilds gespeichert. Über den nicht in Fig. 1 dargestellten Rückwandbus und ein ebenfalls nicht in Fig. 1 dargestelltes I/O-Modul der SPS wird dieser Wert dann dem Stellungsregler 134 zugeführt, der das Ventil 136 dann entsprechend einstellt.

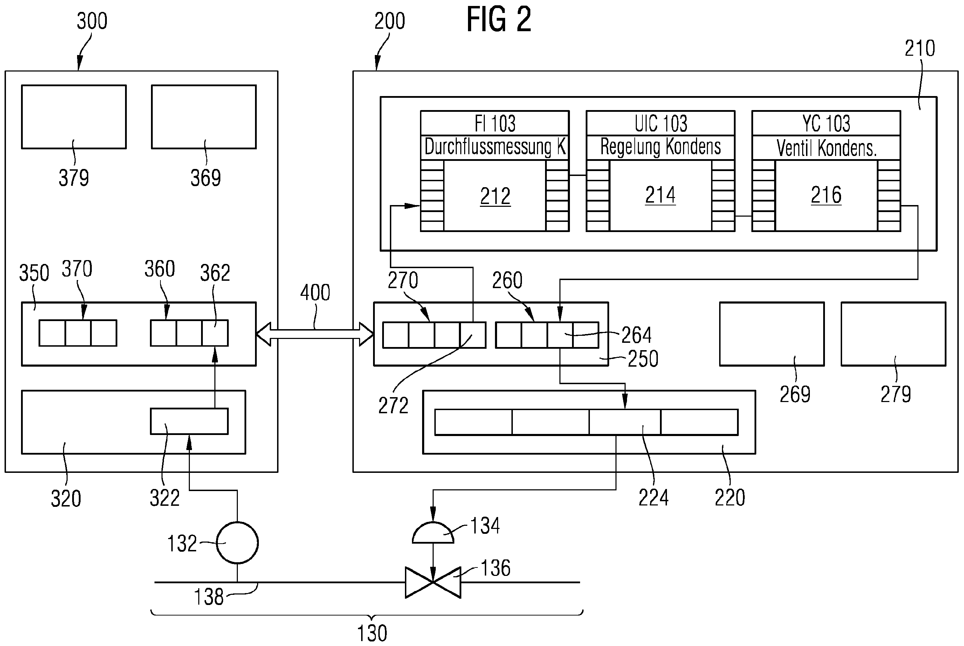

Fig. 2 zeigt das in Fig. 1 bereits dargestellte CPU-Modul 200 und die gesteuerte Anlage 130, die ebenfalls in Fig. 1 dargestellt ist mit den in Fig. 1 bereits verwendeten Bezugszeichen. In Fig. 2 ist eine zweite CPU-Baugruppe 300 für eine zweite SPS dargestellt. Diese weist ein zweites physikalisches Prozessabbild 320 mit einem darin dargestellten Eingangspeicherbereich 322 dar. In Fig. 2 ist die Beschaltung gegenüber Fig. 1 dahingehend geändert, dass das Ausgangssignal des Durchflussmessers 132 über eine I/O-Baugruppe der zweiten SPS und einer Rückwand der zweiten SPS (beides in Fig. 2 nicht dargestellt), der Speicherzelle 322 des physikalischen Prozessabbild 320 der zweiten CPU 300 zugeführt wird.

Auch die zweite CPU weist ein zweites technologisches Signalabbild 350 auf, welches einen lokalen Speicherbereich 360 für dem zweiten physikalischen Prozessabbild 320 zugeordnete technologische Signale aufweist, sowie einen zweiten dezentralen Speicherbereich 370 für Messdaten beispielsweise aus anderen Speicherprogrammierbaren Steuerungen oder anderen Steuereinrichtungen. Den lokalen technologischen Signalen 360 sind wiederum Beschreibungsinformationen 369 für die lokalen technologischen Signale zugeordnet, während den dezentralen technologischen Signalen 370 Beschreibungsinformationen 379 für die dezentralen technologischen Signale zugeordnet sind.

So findet sich beispielsweise ein der Eingangspeicherzelle 322 im physikalischen Prozessabbild 320 für den Messwert des Durchflussmessers zugeordneter Speicherbereich 362 im lokalen Teil 360 des technologischen Signalabbilds 350 des zweiten CPU Moduls 300. Diesem technologischen Durchflusswert 362 ist eine Beschreibungsinformation im Beschreibungsbereich 369 für die lokalen technologischen Signale zugeordnet, mit dessen Hilfe eine Umrechnung des physikalischen Durchflusswerts, der in der Speicherzelle 322 des physikalischen Prozessabbildes 320 gespeichert ist, in einen technologischen Durchflusswert, der in der Speicherzelle 362 des technologischen Signalabbilds 350 gespeichert ist, erfolgt bzw. erfolgen kann.

Allgemein können die Werte im technologischen Signalabbild 250, 350 beispielsweise normiert und/oder mit vorgegebenen oder vorgebbaren Einheiten gespeichert sein, während die Werte im physikalischen Prozessabbild 220, 320 den von den entsprechenden Sensoren 132 kommenden beziehungsweise zu den entsprechenden Aktoren 134 gehenden Absolutwerte beispielsweise für ausgehende Spannungen oder Ströme entsprechen können. Die Umrechung der technologischen, absoluten Signalwerte in die physikalischen Ein- und Ausgangswerte im Prozessabbild 220, 320, erfolgt dann mit den entsprechenden Beschreibungsinformationen 269, 369.

Der zum Ablauf des in der ersten CPU 200 gespeicherten Anwendungsprogramms 212, 214, 216 notwendige Eingangswert für den Durchfluss wird nun von der zweiten CPU 300 über eine Kommunikationsverbindung 400 zur ersten CPU 200 übertragen. Da dieser Durchflusswert nicht von einem an der ersten CPU 200 beziehungsweise der zugehörigen SPS angeschlossenen Sensor stammt, wird der entsprechende technologischen Durchflusswert aus der Speicherzelle 362 des technologischen Signalabbilds 350 der zweiten CPU 300 in eine Speicherzelle 272 des dezentralen Speicherbereichs 270 im technologischen Signalabbild 250 gespeichert.

Dabei erfolgt diese Übertragung in folgender Weise:
Die dezentralen Beschreibungsinformationen 279 für die dezentralen technologischen Signale 270 umfassen zu jeder der benützten Speicherzellen Adressinformationen, welche die Quelle bzw. das Ziel der dort zu speichernden Daten beschreibt. Auf diese Weise entnimmt die Steuereinrichtung 210 der CPU 200 den Beschreibungsinformationen 279 für die dezentralen technologischen Signale 270 zum Beispiel, dass der in der Speicherzelle 272 zu speichernde Wert in der Speicherzelle 362 der zweiten CPU zu finden ist und löst dann eine entsprechende Übertragung aus.

Auf diese Weise können beispielsweise zu allen vier in Fig. 1 und 2 dargestellten Speichersegmenten des dezentralen Signalabbilds 270 im entsprechenden Beschreibungsbereich 279 Adressen hinterlegt werden, unter welchen dort zu speichernde Informationen abholbar bzw. wohin die dort gespeicherten Daten zu übertragen sind.

Der weitere Ablauf des Anwendungsprogramms 212, 214, 216 erfolgt wie in Zusammenhang mit Fig. 1 bereits beschrieben.

Dabei werden unabhängig vom Ablauf des Anwendungsprogramms 212, 214, 216, regelmäßig aktuelle Durchflussdaten über die Kommunikationsverbindung 400 in die erste CPU 200 geladen und dann jeweils die aktuell anliegenden Werte zu Beginn jedes Programmzyklus eingelesen.

Die Ausgestaltung des Automatisierungssystems in Fig. 2 eignet sich beispielsweise für ein sehr ausgedehntes Systems, bei welchem beispielsweise der Durchflussmesser 132 weiter vom Ventil 136 entfernt ist und entsprechende Kabelverbindungen aufwändiger zu realisieren wären.

Bei einer Umstellung des in Fig. 1 dargestellten Automatisierungssystems in eines, wie es in Fig. 2 dargestellt ist, erfordert innerhalb der ersten CPU 200 im Wesentlichen eine Änderung im Bereich des technologischen Signalabbilds 270, wobei insbesondere die dem Durchflusswert zugeordnete Speicherzelle und/oder die dazu gehörende Beschreibungsinformation 269, 279 den neuen Gegebenheiten angepasst werden muss. Weitere Änderungen sind innerhalb der ersten CPU 200 unter Umständen gar nicht erforderlich. Insbesondere muss z.B. das Anwendungsprogramm nicht geändert werden, da die von diesem beispielsweise genützte Adresse des technologischen Signals in Speicherzelle 262 bei z.B. einer Umstellung des Steuerungssystems von dem in Figur 1 dargestellten in das in Figur 2 dargestellte System sich beim Übergang auf Speicherzelle 272 für den Zugriff aus dem Anwendungsprogramm nicht ändert.

Vorteilhafterweise kann beispielsweise allgemein vorgesehen sein, dass ein Adresse, im technologischen Signalabbild gleich bleibt, wenn technologische Signale zwischen dem lokalen technologischen Signalabbild 260 und dem dezentrale technologische Signalabbild 270 verschoben werden. Dabei kann die vorstehend genannte Adresse z.B. als eine physikalische Adresse im Speicher und/oder auch als eine vom Anwendungsprogramm für den Zugriff auf die entsprechende Variable verwendete Adresse ausgebildet sein.

In Systemen gemäß dem Stand der Technik hätte die Gesamtkommunikation innerhalb des aus den CPUs 200, 300 bestehenden Systems aufwändiger umorganisiert und eingerichtet werden müssen sowie z.B. auch das Anwendungsprogramm angepasst werden müssen.

## Patentansprüche

1. Automatisierungseinheit (200, 300) zur Steuerung eines Geräts oder einer Anlage (130) mit
- einem Prozess-Speicherbereich (220, 320) zur Speicherung von Eingangs-Betriebsdaten (222, 322) von einem zu steuernden oder gesteuerten Gerät oder einer zu steuernden oder gesteuerten Anlage (130) und/oder Ausgangs-Steuerdaten (224) für ein zu steuerndes oder gesteuertes Gerät oder einer zu steuernden oder gesteuerten Anlage (130), sowie
- einer Steuereinrichtung (210), welche zum zyklischen Ablauf eines Anwendungsprogramms (212, 214, 216) zur Steuerung des Geräts oder der Anlage (130) ausgebildet und eingerichtet ist, wobei
ein Signal-Speicherbereich (250, 350) zur Speicherung von Anwendungs-Eingangsdaten (262, 272, 362) und Anwendungs-Ausgangsdaten (264) vorgesehen ist, und
die Steuereinrichtung (210) derart ausgebildet und eingerichtet ist, dass vor oder am Beginn eines Ablaufs des Anwendungsprogramms (212, 214, 216) Anwendungs-Eingangsdaten (262, 272) zur Verwendung durch das Anwendungsprogramm (212, 214, 216) aus dem Signal-Speicherbereich (250) geladen werden und/oder am oder nach dem Ende des Ablaufs des Anwendungsprogramms (212, 214, 216) vom Anwendungsprogramm (212, 214, 216) ermittelte Anwendungs-Ausgangsdaten (264) im Signal-Speicherbereich (250) gespeichert werden,
wobei weiterhin die Anwendungs-Eingangsdaten (262, 272, 362) im Signal-Speicherbereich (250, 350) jeweils den Eingangs-Betriebsdaten (222, 322) im Prozess-Speicherbereich (220, 320) und/oder die Anwendungs-Ausgangsdaten (264) im Signal-Speicherbereich (250, 350) jeweils den Ausgangs-Steuerdaten (224) im Prozess-Speicherbereich (220, 320) zugeordnet oder zuordenbar sind
**dadurch gekennzeichnet,**
**dass** die Automatisierungseinheit (200, 300) weiterhin zur Transformation der Eingangs-Betriebsdaten (222, 322) im Prozess-Speicherbereich (220, 320) in die Anwendungs-Eingangsdaten (262, 272, 362) im Signal-Speicherbereich (250, 350) und/oder zur Transformation der Anwendungs-Ausgangsdaten (264) im Signal-Speicherbereich (250, 350) in Ausgangs-Steuerdaten (224) im Prozess-Speicherbereich (220, 320) ausgebildet und eingerichtet ist, wobei die Transformation aus einer Übertragung sowie einer Umwandlung der Daten besteht.

2. Automatisierungseinheit gemäß Anspruch 1,
**dadurch gekennzeichnet,**
**dass** der Signal-Speicherbereich (250, 350) lokale Anwendungs-Eingangsdaten (262, 362) und/oder lokale Anwendungs-Ausgangsdaten (264) umfasst welche einem unmittelbar von der Automatisierungseinheit (200, 300) gesteuerten Gerät oder Geräteteil oder einer unmittelbar von der Automatisierungseinheit gesteuerten Anlage oder Anlagenteil (130) zugeordnet sind.

3. Automatisierungseinheit gemäß Anspruch 2,
**dadurch gekennzeichnet,**
**dass** die Transformation der lokalen Anwendungs-Eingangsdaten (262, 362) zugeordneten Eingangs-Betriebsdaten (222, 322) und/oder der lokalen Anwendungs-Ausgangsdaten (264) eine Übertragung der Daten zwischen Prozess- (220, 320) und Signal-Speicherbereich (250, 350) und insbesondere eine Datenumwandlung umfasst.

4. Automatisierungseinheit gemäß Anspruch 2 oder 3,
**dadurch gekennzeichnet,**
**dass** die Automatisierungseinheit den gespeicherten lokalen Anwendungs-Eingangsdaten (262, 362) und/oder lokalen Anwendungs-Ausgangsdaten (264) zugeordnete lokale Zusatzinformationen (269, 279) umfasst, wobei die lokalen Zusatzinformationen (269, 279) insbesondere bei der Transformation von Eingangs-Betriebsdaten (222, 322) und/oder Anwendungs-Ausgangsdaten (264) in die jeweils zugeordneten Daten verwendet werden.

5. Automatisierungseinheit gemäß einem der Ansprüche 1 bis 4,
**dadurch gekennzeichnet,**
**dass** allen im Prozess-Speicherbereich (220, 320) gespeicherten Eingangs-Betriebsdaten (222, 322) Anwendungs-Eingangsdaten (262, 362), insbesondere lokale Anwendungs-Eingangsdaten (262, 362), und allen im Prozess-Speicherbereich (220, 320) gespeicherten Ausgangs-Steuerdaten (224) Anwendungs-Ausgangsdaten (264) oder lokale Anwendungs-Ausgangsdaten (264) im Signal-Speicherbereich (250, 350) zugeordnet sind.

6. Automatisierungseinheit gemäß einem der Ansprüche 1 bis 5,
**dadurch gekennzeichnet,**
**dass** der Signal-Speicherbereich (250, 350) dezentrale Anwendungs-Eingangsdaten (272) und/oder dezentrale Anwendungs-Ausgangsdaten umfasst, die einem von einer weiteren Automatisierungseinheit (300) gesteuerten weiteren Gerät oder weiteren Geräteteil oder einer von der weiteren Automatisierungseinheit gesteuerten weiteren Anlage oder weiterem Anlagenteil (130) zugeordnet sind.

7. Automatisierungseinheit gemäß Anspruch 6,
**dadurch gekennzeichnet,**
**dass** die Automatisierungseinheit (200, 300) den gespeicherten dezentralen Anwendungs-Eingangsdaten (272) und/oder dezentralen Anwendungs-Ausgangsdaten zugeordnete dezentrale Zusatzinformationen (279, 379) umfasst, wobei die dezentrale Zusatzinformationen (279, 379) Adressinformationen bezüglich den Anwendungs-Eingangsdaten (272) zugeordneten Quelldaten (362) in der mindestens einen weiteren Automatisierungseinheit (300) und/oder Adressinformationen bezüglich den Anwendungs-Ausgangsdaten zugeordneten Zieldaten in der weiteren Automatisierungseinheit (300) umfassen.

8. Automatisierungseinheit gemäß Anspruch 6 oder 7,
**dadurch gekennzeichnet,**
**dass** die weitere Automatisierungseinheit (300) als Automatisierungseinheit gemäß einem der vorstehenden Ansprüche ausgebildet und eingerichtet ist.

9. Automatisierungseinheit gemäß Anspruch 7 und 8,
**dadurch gekennzeichnet,**
**dass** die Quelldaten (362) als im Signal-Speicherbereich (350) der weiteren Automatisierungseinheit (300) gespeicherte Anwendungs-Eingangsdaten (362), insbesondere lokale Anwendungs-Eingangsdaten (362), ausgebildet sind, und/oder,
**dass** die Zieldaten als im Signal-Speicherbereich (350) der weiteren Automatisierungseinheit (300) gespeicherte Anwendungs-Ausgangsdaten, insbesondere lokale Anwendungs-Ausgangsdaten, ausgebildet sind.

10. Automatisierungssystem (200, 300), umfassend eine Automatisierungseinheit (200) gemäß einem der vorstehenden Ansprüche sowie eine weitere Automatisierungseinheit (300) gemäß der Ansprüche 6 bis 9, wobei die Automatisierungseinheit (200) und die weitere Automatisierungseinheit (300) über eine Kommunikationsverbindung (400) verbunden sind.

11. Verfahren zum Betrieb einer Automatisierungseinheit (200) gemäß einem der Ansprüche 1 bis 9, umfassend die Schritte:
a.) Erfassen eines Messwerts von einer zu steuernden Anlage (130) oder einem zu steuernden Gerät;
b.) Speichern des Messwerts als Eingangs-Messwert (222) im Prozess-Speicherbereich (220);
c.) Übertragen und Umwandeln des Eingangs-Messwerts (222) in einen im Signal-Speicherbereich (250) gespeicherten Anwendungs-Startwert (262);
d.) Einlesen des Anwendungs-Startwerts (262) durch die Steuereinrichtung (210) und Ablauf eines Zyklus des Anwendungsprogramms (212, 214, 216), wobei ein Anwendungs-Ausgabewert (264) im Signal-Speicherbereich (250) gespeichert wird;
e.) Übertragen und Umwandeln des Anwendungs-Ausgabewerts (262) in einen im Prozess-Speicherbereich (220) gespeicherten Ausgangs-Steuerwert (224);
f.) Ausgabe des Ausgangs-Steuerwerts (224) an die zu steuernden Anlage (130) oder das zu steuernden Gerät.

12. Verfahren zum Betrieb eines Automatisierungssystems (200, 300) gemäß Anspruch 10, umfassend die Schritte:
a.) Erfassen eines Messwerts von einer zu steuernden Anlage (130) oder einem zu steuernden Gerät;
b.) Speichern des Messwerts als Eingangs-Messwert (322) im Prozess-Speicherbereich (320) der weiteren Automatisierungseinheit (300);
c.) Umwandeln des Eingangs-Messwerts (322) sowie übertragen des umgewandelten Eingangs-Messwerts (362) an die Automatisierungseinheit (200) und Abspeichern des umgewandelten Eingangs-Messwerts als im Signal-Speicherbereich (250) der Automatisierungseinheit (200) gespeicherten Anwendungs-Startwert (272);
d.) Einlesen des Anwendungs-Startwerts (272) durch die Steuereinrichtung (210) der Automatisierungseinheit (200) und Ablauf eines Zyklus des Anwendungsprogramms (212, 214, 216) in der Automatisierungseinheit (200), wobei ein Anwendungs-Ausgabewert (264) im Signal-Speicherbereich (250) der Automatisierungeinheit (200) gespeichert wird;
e.) Übertragen des Anwendungs-Ausgabewerts (264) zur weiteren Automatisierungseinheit (300) sowie Umwandeln des Anwendungs-Ausgabewerts (264) und Speicherung des umgewandelten Anwendungs-Ausgabewerts als Ausgangs-Steuerwert;
f.) Ausgabe des Ausgangs-Steuerwerts an die zu steuernde Anlage (130) oder das zu steuernde Gerät.

## Claims

1. Automation unit (200, 300) for controlling a device or an installation (130), having
- a process storage area (220, 320) for storing input operating data (222, 322) relating to a device which is to be controlled or is controlled or relating to an installation (130) which is to be controlled or is controlled and/or output control data (224) for a device which is to be controlled or is controlled or for an installation (130) which is to be controlled or is controlled, and
- a control device (210) which is designed and set up to cyclically execute an application program (212, 214, 216) for controlling the device or the installation (130), wherein
a signal storage area (250, 350) for storing application input data (262, 272, 362) and application output data (264) is provided, and
the control device (210) is designed and set up in such a manner that, before or at the start of execution of the application program (212, 214, 216), application input data (262, 272) for use by the application program (212, 214, 216) are loaded from the signal storage area (250) and/or, at or after the end of the execution of the application program (212, 214, 216), application output data (264) determined by the application program (212, 214, 216) are stored in the signal storage area (250),
wherein the application input data (262, 272, 362) in the signal storage area (250, 350) are also each assigned or can be assigned to the input operating data (222, 322) in the process storage area (220, 320), and/or the application output data (264) in the signal storage area (250, 350) are each assigned or can be assigned to the output control data (224) in the process storage area (220, 320),
**characterized**
**in that** the automation unit (200, 300) is also designed and set up to transform the input operating data (222, 322) in the process storage area (220, 320) into the application input data (262, 272, 362) in the signal storage area (250, 350) and/or to transform the application output data (264) in the signal storage area (250, 350) into output control data (224) in the process storage area (220, 320), wherein the transformation involves transmitting and converting the data.

2. Automation unit according to Claim 1,
**characterized**
**in that** the signal storage area (250, 350) comprises local application input data (262, 362) and/or local application output data (264) which are assigned to a device or device part directly controlled by the automation unit (200, 300) or to an installation or installation part (130) directly controlled by the automation unit.

3. Automation unit according to Claim 2,
**characterized**
**in that** the transformation of the input operating data (222, 322) assigned to local application input data (262, 362) and/or of the local application output data (264) comprises transmitting the data between the process storage area (220, 320) and the signal storage area (250, 350) and, in particular, a data conversion.

4. Automation unit according to Claim 2 or 3,
**characterized**
**in that** the automation unit comprises local additional information (269, 279) which is assigned to the stored local application input data (262, 362) and/or local application output data (264), wherein the local additional information (269, 279) is used, in particular, when transforming input operating data (222, 322) and/or application output data (264) into the respectively assigned data.

5. Automation unit according to one of Claims 1 to 4,
**characterized**
**in that** application input data (262, 362), in particular local application input data (262, 362), are assigned to all input operating data (222, 322) stored in the process storage area (220, 320), and application output data (264) or local application output data (264) in the signal storage area (250, 350) are assigned to all output control data (224) stored in the process storage area (220, 320).

6. Automation unit according to one of Claims 1 to 5,
**characterized**
**in that** the signal storage area (250, 350) comprises decentralized application input data (272) and/or decentralized application output data which are assigned to a further device or further device part controlled by a further automation unit (300) or to a further installation or further installation part (130) controlled by the further automation unit.

7. Automation unit according to Claim 6,
**characterized**
**in that** the automation unit (200, 300) comprises decentralized additional information (279, 379) assigned to the stored decentralized application input data (272) and/or decentralized application output data, wherein the decentralized additional information (279, 379) comprises address information relating to source data (362) assigned to the application input data (272) in the at least one further automation unit (300) and/or address information relating to target data assigned to the application output data in the further automation unit (300).

8. Automation unit according to Claim 6 or 7,
**characterized**
**in that** the further automation unit (300) is designed and set up as an automation unit according to one of the preceding claims.

9. Automation unit according to Claims 7 and 8,
**characterized**
**in that** the source data (362) are in the form of application input data (362), in particular local application input data (362), stored in the signal storage area (350) of the further automation unit (300),
and/or
**in that** the target data are in the form of application output data, in particular local application output data, stored in the signal storage area (350) of the further automation unit (300).

10. Automation system (200, 300) comprising an automation unit (200) according to one of the preceding claims and a further automation unit (300) according to Claims 6 to 9, wherein the automation unit (200) and the further automation unit (300) are connected via a communication connection (400).

11. Method for operating an automation unit (200) according to one of Claims 1 to 9, comprising the steps of:
a.) recording a measured value of an installation (130) to be controlled or of a device to be controlled;
b.) storing the measured value as an input measured value (222) in the process storage area (220);
c.) transmitting and converting the input measured value (222) into an application starting value (262) stored in the signal storage area (250);
d.) reading in the application starting value (262) by means of the control device (210) and executing a cycle of the application program (212, 214, 216), wherein an application output value (264) is stored in the signal storage area (250);
e.) transmitting and converting the application output value (262) into an output control value (224) stored in the process storage area (220);
f.) outputting the output control value (224) to the installation (130) to be controlled or to the device to be controlled.

12. Method for operating an automation system (200, 300) according to Claim 10, comprising the steps of:
a.) recording a measured value of an installation (130) to be controlled or of a device to be controlled;
b.) storing the measured value as an input measured value (322) in the process storage area (320) of the further automation unit (300);
c.) converting the input measured value (322) and transmitting the converted input measured value (362) to the automation unit (200) and storing the converted input measured value as an application starting value (272) stored in the signal storage area (250) of the automation unit (200);
d.) reading in the application starting value (272) by means of the control device (210) of the automation unit (200) and executing a cycle of the application program (212, 214, 216) in the automation unit (200), wherein an application output value (264) is stored in the signal storage area (250) of the automation unit (200);
e.) transmitting the application output value (264) to the further automation unit (300) and converting the application output value (264) and storing the converted application output value as an output control value;
f.) outputting the output control value to the installation (130) to be controlled or to the device to be controlled.

## Revendications

1. Unité d'automatisation (200, 300) destinée à la commande d'un appareil ou d'une installation (130), comprenant :
- une zone de mémoire de procédé (220, 320) permettant de stocker des données opérationnelles entrées (222, 322) d'un appareil à commander ou commandé ou d'une installation à commander ou commandée (130) et/ou des données de commande de sortie (224) pour un appareil à commander ou commandé ou une installation à commander ou commandée (130), et
- un moyen de commande (210) qui est conçu et agencé pour le déroulement cyclique d'un programme d'application (212, 214, 216) pour commander l'appareil ou l'installation (130), dans laquelle
une zone de mémoire de signal (250, 350) permettant de stocker des données entrées d'application (262, 272, 362) et des données de sortie d'application (264) est prévue et le moyen de commande (210) est conçu et agencé de telle sorte qu'avant le ou au début du déroulement du programme d'application (212, 214, 216), des données d'entrée d'application (262, 272) à utiliser par le programme d'application (212, 214, 216) sont chargées à partir de la zone de mémoire de signal (250) et/ou, à la fin ou après la fin du déroulement du programme d'application (212, 214, 216), des données de sortie d'application (264) déterminées par le programme d'application (212, 214, 216) sont enregistrées dans la zone de mémoire de signal (250), et
dans laquelle en outre les données d'entrée d'application (262, 272, 362) dans la zone de mémoire de signal (250, 350) sont associées ou associables respectivement aux données opérationnelles entrées (222, 322) dans la zone de mémoire de procédé (220, 320) et/ou les données de sortie d'application (264) dans la zone de mémoire de signal (250, 350) sont associées ou associables respectivement aux données de commande de sortie (224) dans la zone de mémoire de procédé (220, 320),
**caractérisé en ce que**
l'unité d'automatisation (200, 300) est conçue et agencée en outre pour transformer les données opérationnelles entrées (222, 322) dans la zone de mémoire de procédé (220, 320) en données d'entrée d'application (262, 272, 362) dans la zone de mémoire de signal (250, 350) et/ou pour transformer les données de sortie d'application (264) dans la zone de mémoire de signal (250, 350) en données de commande de sortie (224) dans la zone de mémoire de procédé (220, 320), la transformation consistant en une transmission et une conversion des données.

2. Unité d'automatisation selon la revendication 1,
**caractérisée en ce que**
la zone de mémoire de signal (250, 350) contient des données d'entrée d'application locales (262, 362) et/ou des données de sortie d'application (264) locales qui sont associées à un appareil ou une partie d'appareil commandé(e) directement par l'unité d'automatisation (200, 300) ou à une installation ou une partie d'installation (130) commandée directement par l'unité d'automatisation.

3. Unité d'automatisation selon la revendication 2,
**caractérisée en ce que**
la transformation des données opérationnelles entrées (222, 322) associées à des données d'entrée d'application (262, 362) locales et/ou des données de sortie d'application locales (264) comprend une transmission des données entre la zone de mémoire de procédé (220, 320) et la zone de mémoire de signal (250, 350) et notamment une conversion des données.

4. Unité d'automatisation selon la revendication 2 ou 3,
**caractérisée en ce que**
l'unité d'automatisation comprend des informations complémentaires (269, 279) locales associées aux données d'entrée d'application (262, 362) locales stockées et/ou aux données de sortie d'application (264) locales stockées, dans laquelle les informations complémentaires (269, 279) locales sont utilisées notamment lors de la transformation des données opérationnelles entrées (222, 322) et/ou des données de sortie d'application (264) en les données respectivement associées.

5. Unité d'automatisation selon l'une quelconque des revendications 1 à 4,
**caractérisée en ce que** des données d'entrée d'application (262, 362), notamment des données d'entrée d'application locales (262, 362) sont associées à toutes les données opérationnelles entrées (222, 322) stockées dans la zone de mémoire de procédé (220, 320) et des données de sortie d'application (264) ou des données de sortie d'application locales (264) dans la zone de mémoire de signal (250, 350) sont associées à toutes les données de commande de sortie stockées dans la zone de mémoire de procédé (220, 320).

6. Unité d'automatisation selon l'une quelconque des revendications 1 à 5,
**caractérisée en ce que**
la zone de mémoire de signal (250, 350) comprend des données d'entrée d'application (272) décentralisées et/ou des donnée de sortie d'application décentralisées, qui sont associées à un(e) autre appareil ou partie d'appareil commandé(e) par une autre unité d'automatisation (300) ou à une autre installation ou partie d'installation (130) commandée par l'autre unité d'automatisation.

7. Unité d'automatisation selon la revendication 6,
**caractérisée en ce que**
l'unité d'automatisation (200, 300) comprend des informations complémentaires (269, 279) décentralisées associées aux données d'entrée d'application (272) décentralisées stockées et/ou aux données de sortie d'application décentralisées stockées, dans laquelle les informations complémentaires (269, 279) décentralisées contiennent des informations d'adresse concernant des données source (362) associées aux données d'entrée d'application (272) dans la au moins une autre unité d'automatisation (300) et/ou des informations d'adresse concernant des données cibles associées aux données de sortie d'application dans l'autre unité d'automatisation (300) .

8. Unité d'automatisation selon la revendication 6 ou 7,
**caractérisée en ce que**
l'autre unité d'automatisation (300) est conçue et agencée comme une unité d'automatisation selon l'une quelconque des revendications précédentes.

9. Unité d'automatisation selon les revendications 7 et 8
**caractérisée en ce que**
les données source (362) sont constituées de données d'entrée d'application (362), notamment de données d'entrée d'application locales (362) stockées dans la zone de mémoire de signal (350) de l'autre unité d'automatisation (300),
et/ou
les données cibles sont constituées de données de sortie d'application, notamment de données de sortie d'application locales stockées dans la zone de mémoire de signal (350) de l'autre unité d'automatisation (300).

10. Système d'automatisation (200, 300) comprenant une unité d'automatisation (200) selon l'une quelconque des revendications précédentes et une autre unité d'automatisation (300) selon les revendications 6 à 9, dans lequel l'unité d'automatisation (200) et l'autre unité d'automatisation (300) sont reliées par une liaison de communication (400).

11. Procédé pour faire fonctionner une unité d'automatisation (200) selon l'une des revendications 1 à 9, comprenant les étapes suivantes :
a) détection d'une valeur mesurée d'une installation à commander (130) ou d'un appareil à commander,
b) enregistrement de la valeur mesurée en tant que valeur mesurée d'entrée (222) dans la zone de mémoire de procédé (220),
c) transmission et conversion de la valeur mesurée d'entrée (222) en une valeur initiale d'application (262) stockée dans la zone de mémoire de signal (250),
d) lecture de la valeur initiale d'application (262) par le moyen de commande (210) et déroulement d'un cycle du programme d'application (212, 214, 216), dans lequel une valeur de sortie d'application (264) est enregistrée dans la zone de mémoire de signal (250),
e) transmission et conversion de la valeur de sortie d'application (264) en une valeur de commande de sortie (224) enregistrée dans la zone de mémoire de procédé (220), et
f) émission de la valeur de commande de sortie (224) au niveau de l'installation à commander (130) ou de l'appareil à commander.

12. Procédé pour faire fonctionner un système d'automatisation (200, 300) selon la revendication 10, comprenant les étapes suivantes :
a) détection d'une valeur mesurée d'une installation à commander (130) ou d'un appareil à commander,
b) enregistrement de la valeur mesurée en tant que valeur mesurée d'entrée (322) dans la zone de mémoire de procédé (320) de l'autre unité d'automatisation (300),
c) conversion de la valeur mesurée d'entrée (322) et transmission de la valeur mesurée d'entrée convertie (362) à l'unité d'automatisation (200) et mise en mémoire de la valeur mesurée d'entrée convertie en tant que valeur initiale d'application (272) enregistrée dans la zone de mémoire de signal (250) de l'unité d'automatisation (200),
d) lecture de la valeur initiale d'application (272) par le moyen de commande (210) de l'unité d'automatisation (200) et déroulement d'un cycle du programme d'application (212, 214, 216) dans l'unité d'automatisation (200), dans lequel une valeur de sortie d'application (264) est enregistrée dans la zone de mémoire de signal (250) de l'unité d'automatisation (200),
e) transmission de la valeur de sortie d'application (264) à l'autre unité d'automatisation (300), conversion de la valeur de sortie d'application (264) et enregistrement de la valeur de sortie d'application convertie en tant que valeur de commande de sortie, et
f) émission de la valeur de commande de sortie au niveau de l'installation à commander (130) ou de l'appareil à commander.
